# EUROPEAN PATENT APPLICATION

(11) **EP 2 325 827 A1**
(43) Date of publication of application: **25.05.2011**
(21) Application number: 09174132.2
(22) Date of filing: 27.10.2009
(51) Int. Cl.: G09B 23/00

(54) **Medical simulator with injection device**

(71) Applicant: Technische Universiteit Eindhoven, 5612 AZ Eindhoven (NL)
(72) Inventor: Offermans, Serge Alexander Marie, 5621 HN, Eindhoven (NL); Deckers, Eva Josephina Lambertus, 5614 HD, Eindhoven (NL); Feijs, Laurentius Michiel Gerardus, 5663 EZ, Geldrop (NL); Delbressine, Franciscus Leonardus Marie, 6463 GL, Kerkrade (NL); Oei, Swan Gie, 5502 PT, Veldhoven (NL)
(74) Representative: Sterken, Antoon Joseph Elisabert

(57) **Abstract**

A medical simulator 611 comprises a vessel 609 representing a simulated blood vessel. The vessel comprises a simulated vessel wall capable of being punctured by an electrically conductive injection needle 503. The vessel wall comprises a first electrically conductive layer for closing an electric circuit when the first electrically conductive layer is punctured by the electrically conductive injection needle 503. An electric subsystem applies an alternating current trigger voltage to the injection needle 503 when the electric circuit is closed, for triggering a signal source in an injection device 502 connected to the injection needle 503. The electric subsystem is arranged for applying a detection voltage to at least one electrically conductive layer for detecting a closing of the circuit by the injection needle 503. Injection device 502 has a signal source such that an electric circuit comprising the signal source is closed and the signal source is activated when a voltage is applied to the injection needle 503.

## Description

### FIELD OF THE INVENTION

The invention relates to a medical simulator. The invention further relates to an injection device for a medical simulator. The invention further relates to simulating an infusion.

### BACKGROUND OF THE INVENTION

Medical simulators are used for training medical practitioners. They may comprise a mock body part, for example a limb or a complete human body, which may be constructed such that particular medical acts, such as medical diagnosis and/or treatment, can be trained on them. For example they may be made of a material which can be punctured with an injection needle. To train injections and/or infusion, simulators typically comprise a vessel containing fluid which may pulsate to simulate blood flow realistically. A mock body part or a mock body may be referred to as a mannequin.

Such a medical simulator is known from US 6,773,263 B2, which describes a medical simulator designed to teach and to refine the psychomotor skills associated with the medical procedures of administering regional and local anesthetic and analgesic agents. The medical simulator known from the cited document is designed to simulate a procedure with a device that is conductive to puncture the skin. The cited document discloses a simulated circulatory system and elements such as an artery or vein. Interaction with the artery or vein is simulated using a fluid to simulate blood flow and an arterial pulse. The cited document further discloses simulation of the nerve including a plurality of alternating conductive and insulating layers, and sensor means comprising a network of electrical contacts at each conductive layer or element. Electrical contact with each of these independent layers by means of an electrically charged needle or implement completes an electrical circuit so that the needle location can be evaluated. Detection of penetration relies on the electrical current flow from the penetrating needle to an electrical contact through the specific layer in which the tip of the needle is present. Only the needle tip is conductive. Therefore, a specific layer can be identified as being solely in contact with the needle and hence the needle location within the anatomical layers determined.

### SUMMARY OF THE INVENTION

It would be advantageous to have an improved medical simulator. A first aspect of the invention provides a medical simulator comprising a vessel representing a simulated blood vessel, the vessel comprising a simulated vessel wall capable of being punctured by an injection needle which is provided with an electrically conductive outside surface, wherein the vessel wall comprises a first electrically conductive layer for closing an electric circuit when the first electrically conductive layer is punctured by the injection needle.

The closing of the electric circuit may be used to detect the puncturing of the (simulated) vessel wall. This means that any consequences of the puncture may be simulated using electric means in response to the closing of the electric circuit. This way, the simulation of vessel puncture may proceed without using actual fluids. This allows a clean simulation environment and may reduce the work of cleaning the simulation equipment. The electric current caused by the closing of the electric circuit may also be used to generate a signal to the user of the simulator, using a suitable signal generator, to indicate that the simulated vessel has been successfully punctured. Moreover, the time and/or duration of the puncturing may be electronically monitored and/or logged.

The medical simulator may comprise an electric subsystem for applying a trigger voltage to the injection needle when the electric circuit is closed, for triggering a signal source in an injection device connected to the injection needle. The trigger voltage allows the injection device to respond to the fact that the circuit is closed, which means that the needle has punctured the vessel. For example, a signal may be generated inside the injection needle, to simulate an inflow of blood from the vessel into the injection device.

The trigger voltage may comprise an alternating voltage. An alternating voltage is a suitable way to provide a voltage through a single electrode represented by a conductive injection needle. No second electric wire needs to be provided in the needle.

The electric subsystem may be further arranged for applying a detection voltage to at least one electrically conductive layer for detecting a closing of the circuit by the injection needle. This way, the injection needle does not need its own electric supply, nor a connection to ground. For example, the needle can be a conventional infusion needle used in medical practice.

The electric subsystem may be arranged for applying the trigger voltage in response to the detection of the closing of the circuit. Two voltages may be realized inside the medical simulator, a detection voltage and a trigger voltage. This allows to use a low-voltage and/or DC voltage as the detection voltage. This way, there is no need to generate a higher-voltage and/or alternating voltage as the trigger voltage at times when the circuit is not closed. Moreover, it allows to switch the trigger voltage on and off in dependence on not only the detection voltage, but also in dependence on other aspects. Examples hereof will be described hereinafter.

The medical simulator may comprise a second electrically conductive layer, the first electrically conductive layer being arranged at least partly in between a vessel lumen and the second electrically conductive layer, wherein the detection voltage comprises a potential difference between the first electrically conductive layer and the second electrically conductive layer, and the electric subsystem is arranged for detecting an electric conductivity between the first electrically conductive layer and the second electrically conductive layer.

Two electrically conductive layers may be electrically connected by a needle puncturing both layers. This is a suitable method of detecting the puncturing of the layers, without needing any specially adapted injection needle. Any electrically conductive needle can be used.

The vessel wall may further comprise a third electrically conductive layer arranged with respect to the first electrically conductive layer such that the injection needle can puncture both the first and the third layer in one injection, wherein the first layer is punctured upon entering the vessel, and the third layer is punctured when the injection needle is pushed through the vessel, making a second puncture in the vessel wall. This allows to detect both a correct injection into the vessel and an erroneous puncture through the vessel. For example, when training to apply an infusion needle, this is useful. It allows to train to bring the point of the needle inside the vessel, not through the vessel. A plurality of electrically conductive layers may be provided, which may be organized according to a layout in the medical simulator in such a way that it becomes possible to detect the location of the injection needle and/or an angular orientation of the injection needle by detecting which layer(s) is/are punctured by the injection needle.

The electric subsystem may be further arranged for applying a further detection voltage for detecting a closing of a further circuit comprising the third electrically conductive layer by the injection needle, and for adjusting a trigger voltage in response to the detection of the closing of the further circuit. The detection of the closing of the further circuit may correspond to a puncture of the injection needle through the vessel. The adjustment of the trigger voltage allows an electric component connected to the injection needle to give immediate feedback to the trainee, at the most natural place, which is the needle object which he or she is working with at that moment. Other persons present at the team training, such as other trainees and/or a trainer, may also get feedback, for example because they can see or hear the feedback signal. The adjustment of the trigger voltage may comprise lowering the trigger voltage or stopping the trigger voltage. This way, a signal being generated in the injection needle because of the trigger voltage may also be lowered or stopped.

Another aspect of the invention provides an injection device for simulating an injection into a simulated blood vessel of a medical simulator, comprising
a needle holding element for holding an injection needle which is provided with an electrically conductive outside surface;
a signal source for generating a human-perceptible signal; and
a needle connection element for electrically connecting the signal source to the electrically conductive outside surface, such that an electric circuit comprising the signal source is closed and the signal source is activated when a voltage is applied to the electrically conductive outside surface.

When the needle touches an electrically conductive layer of the medical simulator, the electric circuit may be closed. This electric circuit may comprise the electrically conductive layer, the electrically conductive surface of the injection needle, the injection needle connection element, and the signal source. The source of electricity may comprise the trigger voltage applied to at least one of the electrically conductive layers. The closing of this electric circuit may be used to produce the human-perceptible signal. This allows the injection device to produce a human-perceptible signal using an electricity-powered signal source in the injection device. Generating the human-perceptible signal in the injection device improves the simulation, because real injection devices also may have a human-perceptible signal, in the form of some blood entering the injection device, when a blood vessel is punctured. This way, the users of the injection device do not need to look at a computer screen, for example, to see whether they have punctured the vessel. Moreover, it is not necessary to have fluids such as artificial blood inside the vessel and/or injection device, while still being able to obtain feedback from the injection device. Moreover, no power supply is needed in the injection device.

The injection device may comprise an infusion connector for connecting a tube for administering a liquid to the vessel. This allows the injection device to be used for simulating the use of an infusion by connecting the infusion tube to the injection device.

The signal source may comprise a light source. A light source is easy to implement and does not need fluid. A red light can be used to resemble blood.

The light source may comprise a neon light. The neon light, or other kind of light, may be serially connected with a resistor. A neon light can be easily lit in combination with an alternating voltage and a capacitor. The alternating voltage may be 50 or 60 Hz, but may also have another frequency. A higher frequency, such as 400 Hz, is also possible and takes advantage of a reduced impedance of capacities at higher frequencies.

The injection device may comprise an electrically conductive surface element electrically connected to the signal source, for enabling a human being to act as a capacitor by touching the surface element. This is an efficient way to provide a connection to ground, which may make obsolete any electric wire connected to the injection device. Moreover, it is safe for the user when appropriate voltages are used.

Another aspect of the invention provides a method of using a medical simulator, comprising puncturing an electrically conductive layer of a simulated vessel wall with an injection needle which is provided with an electrically conductive outside surface to close an electric circuit. This method allows to detect and simulate the injection of a vessel without needing actual fluids in the simulator. Consequently the simulator can be used in a dry operating mode. It provides an efficient training process.

Another aspect of the invention provides a method of training a medical team a medical procedure, wherein this medical procedure comprises a step of injecting an injection device as set forth into a medical simulator as set forth. This allows a team of medical professionals to train their social skills and their skills in a medical procedure. For example, a gynecologist may perform a team training with one or more midwives and/or nurses.

It will be appreciated by those skilled in the art that two or more of the above-mentioned embodiments, implementations, and/or aspects of the invention may be combined in any way deemed useful. Modifications and variations of the embodiments disclosed herein can be carried out by a person skilled in the art on the basis of the present description.

### BRIEF DESCRIPTION OF THE DRAWINGS

These and other aspects of the invention are apparent from and will be elucidated with reference to the embodiments described hereinafter. In the drawings, similar items have been labeled with the same reference numerals.
Fig. 1 is an illustration of an injection device;
Fig. 2 is an illustration of a simulated infusion system;
Fig. 3 is an illustration of a puncture of an artificial vessel;
Fig. 4 is an illustration of a puncture through the artificial vessel;
Fig. 5 is a diagram of an electric subsystem used in conjunction with the medical simulator and/or injection device.

### DETAILED DESCRIPTION OF EMBODIMENTS

The simulator described herein may be used, for example, to simulate the application and positioning of an infusion. The simulator may be used for training of medical workers, training for first aid tasks in areas such as surgery, obstetrics, and acute care paramedics. In some training sessions, the main function of the infusion simulator is less directed to the practice of the actual positioning; the trainees involved may already be experienced in positioning. The training may be mainly about the protocol. The trainees can use a medical simulator to train the medical protocol and operate as a team of medical professionals. For example, the trainees may learn to check their work and/or make sure it is done correctly. In such a case, the use of actual fluids in a training session may not be necessary to obtain the desired training results.

The simulation system described herein, when used as an infusion simulation system, may comprise an artificial vein, a needle comprising a pricking part and a flexible tube, a tube connected to a reservoir with a simulated drip, a slider which functions as a dripping speed regulator and a simulated infusion sack. Herein, 'simulated' may be understood as 'imitated'; the simulated objects may look like the corresponding objects used in clinical practice. Also, some aspects of the behavior of the objects may be imitated, although the imitation may be a simplified representation of the real behavior. For example, a fluid flow may be represented by means of a light signal generated by an object.

The simulation system described herein does not need any liquids to perform a simulation of an infusion. The use of the needle can be made highly similar to needles normally used, because the simulator may provide feedback which is similar to the feedback obtained with equipment used in real healthcare practice. The artificial vein may be made to look realistic and feel realistic when pricking. The feedback of little blood drawn into the needle may be integrated by means of a signal generator, such as a light source. This signal may also be used to provide feedback when the needle has exited the artificial vein again. Moreover, the feedback of the dripping of an infusion may be integrated. This dripping feedback may allow the trainees to check whether the plastic tube is positioned correctly within the vein. Although use of liquids is not necessary, it is possible to build a simulator which allows to use fluids in addition to the techniques described herein.

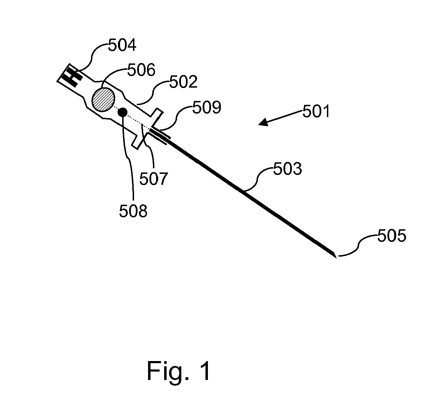

Fig. 1 illustrates an injection system 501 for simulating an injection into a simulated blood vessel of a medical simulator. The injection system 501 shown in Fig. 1 may be used to apply an infusion to a simulated patient, for example. The injection system 501 may comprise an injection device 502. The injection device 502 may comprise a housing and may be used by a clinical professional to hold the needle. The injection device 502 may comprise a needle holding element 509 for holding the injection needle 503. By means of the needle holding element 509, the injection needle 503 may be rigidly connected to the injection device 502. Alternatively, by means of the needle holding element 509, the injection needle 503 may be removably connected to the injection device 502. This allows to replace the needle 503 while re-using the injection device 502. The injection device 502 may comprise a signal source 508 for generating a human-perceptible signal. This signal may be generated when a voltage is applied to the injection needle 503. This voltage may be provided to the signal source 508 via the injection needle 503, so that the signal source 508 can use the power provided by this voltage. To this end, a needle connection element 507 may be provided for electrically connecting the signal source 508 to the electrically conductive injection needle 503.

It will be understood that the injection needle 503 need not be completely made of electrically conductive material. It is sufficient when an outside surface of the injection needle is electrically conductive. This conductive outside surface needs only cover part of the total outside surface of the injection needle 503. The conductive outside surface should be large enough to be able to connect one or more electrically conductive layers in the medical simulator. In embodiments in which two or more electrically conductive layers are electrically connected by the injection needle, the conductive outside surface should be large enough to be able to connect these layers. For example, an outside layer of the needle 503 may be made of conductive material. The conductivity is sufficient to conduct electricity from the needle tip 505 to the needle connection element 507. Moreover, the conductivity may be sufficient to electrically connect any materials which the needle has punctured and through which the needle extends at any given time. For example, the needle 503 could have a non-conducting core. In another example, the needle 503 is surrounded by an infusion tube, or infusion cannula. In such a case, the outside surface of the infusion tube may be made electrically conductive to provide the injection needle 503 with an electrically conductive outside surface.

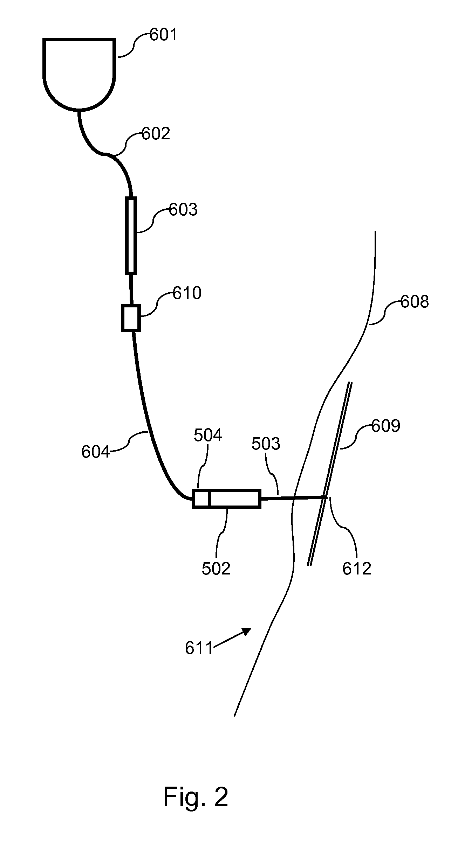

An infusion tube may be used in conjunction with the needle. This tube may also be made of conductive material, or at least have a conductive surface, to enable it to provide the electric conductance when the needle is removed and the infusion tube is left in the vessel. Another part of the needle that has to be adjusted is the plastic tube. The injection device may comprise an infusion connector 504 for connecting an infusion tube 604, as illustrated in the overview drawing in Fig. 2.

Returning to Fig. 1, the signal source 508 of the injection device 502 may comprise a light source. An example of a light source is a neon light. However, this is not a limitation. The light may comprise a red light, to represent the color of blood. This is similar to the small amount of blood which may run into the injection device when applying an infusion to a real patient.

The injection device 502 may comprise an electrically conductive surface element 506 electrically connected to the signal source 508. The electrically conductive surface element 506 is at an outside of the injection device 502, so that a human being may touch the surface element when holding the injection device 502 and while puncturing the artificial vessel 609 with the needle 503. This way, the human being may become part of an electronic circuit and may act as a capacitor with respect to ground. For example, substantially the whole outside of the injection device 502 may be covered with the electrically conductive surface element 506, or one or more gripping areas may be covered with the electrically conductive surface element 506. A neon light is appropriate to use in this application because it can be lit in a circuit having a human being acting as a capacitor, and an alternating current applied to the other end of the electric circuit. Such an application of neon lights is known by itself in the field of power detectors. Other kinds of lights may have similar usability. The injection device 502 may have a housing and the electrically conductive surface element 506 may be provided at an outside of the housing.

The injection apparatus is not limited to infusion systems. Other variants are possible, for example as a syringe. In such a case, the injection device 502 may be replaced by a barrel and plunger, while the signal generator 508 and/or the conductive surface 506 may be provided in and/or on the barrel, respectively.

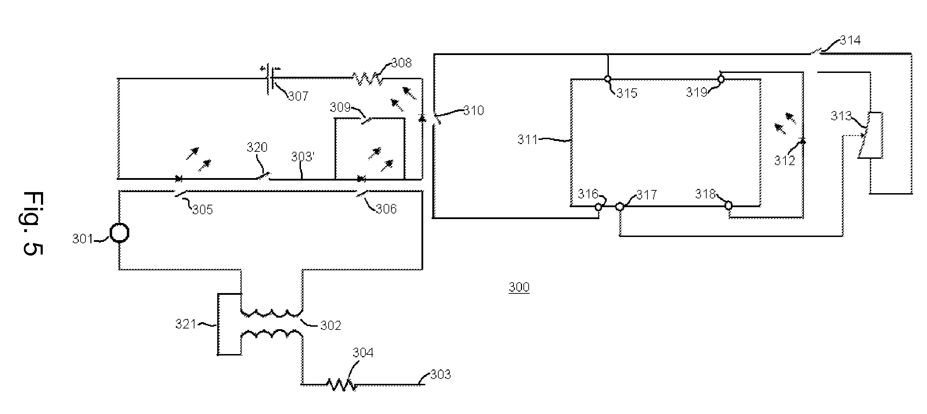

Fig. 2 illustrates an overview of an infusion system in use. The infusion bag 601 is connected to a drip 603 via a tube 602. The drip 603 is connected to the infusion connector 504 of the injection device 502 via tube 604. The drip 603 may comprise a signal generator for providing a signal representing the dripping. For example, a light could flash for each drip. The signal generator of the drip could comprise a light source, such as a LED. For example a blue light or a white light could be used. A slider 610 may be provided on tube 604 to control the speed of the dripping. In the simulator, the slider 610 comprises a variable resistor which is also represented at 313 in the electrical diagram of Fig. 5. In real medical use, a similar slider can be used to partially close the tube 604. The injection device 502 holds an injection needle 503 which has punctured a skin surface 608 of a medical simulator 611. The medical simulator 611 comprises an artificial vessel 609, for example an artificial vein. An artery is also possible. As shown in the figure, the injection needle 503 has punctured the vessel 609 at the site 612. The medical simulator 611 may comprise a mannequin. The medical simulator 611 may be shaped as a body part or as a complete body to make the simulation relatively realistic. However, the medical simulator may have any shape.

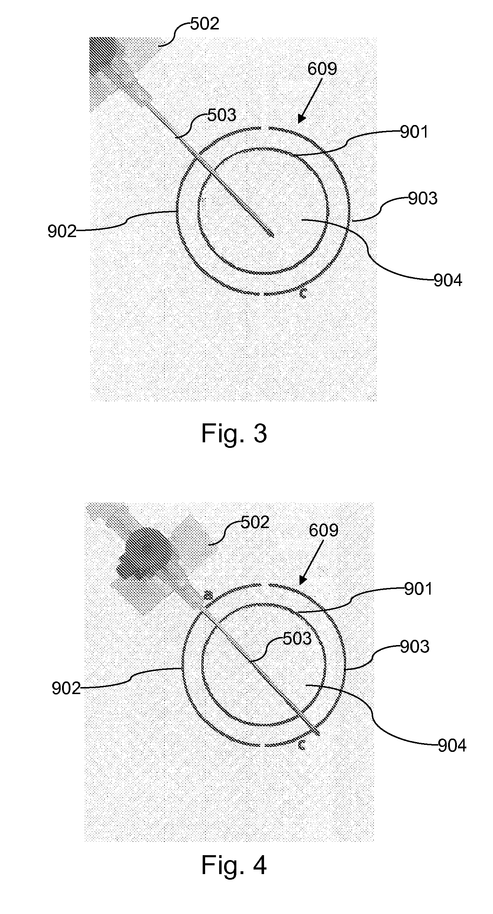

Fig. 3 is a diagram of a cross section of the vessel 609 at the site 612 where the needle 503 has punctured the vessel 609. Generally the vessel 609 comprises a vessel wall surrounding a vessel lumen 904. The vessel wall may have mechanical properties similar to an actual biological vessel, as far as this is relevant for the training purpose. Of the vessel wall, only a number of electrically conductive layers have been drawn in the figure. As will be described later, some of these layers may be located outside the vessel wall. The vessel wall may be multi-layered. Conductive layers are electrically separated by isolating layers. The simulated vessel wall is capable of being punctured by an electrically conductive injection needle 503. The vessel wall comprises an electrically conductive layer 901. The vessel wall may further comprise a non-conductive layer, wherein the conductive layer 901 is arranged closer to the lumen 904 than the non-conductive layer. Consequently, the injection needle 503 may come into contact with the conductive layer 901 only after puncturing the non-conductive layer of the vessel wall. A similar effect may be obtained by providing the injection needle 503 with a non-conductive tip 505. In this case, the conductive layer 901 will only be in electrical contact with the conductive part of the injection needle 503 when the injection needle 503 has punctured the conductive layer 901. When the electrically conductive injection needle 503 touches the conductive layer 901, an electric circuit is closed.

The medical simulator 611 may comprise an electric subsystem. An example of such an electric subsystem is illustrated in the block diagram of Fig. 5. This block diagram will be described in more detail hereinafter. Returning to Fig. 3, the electric subsystem applies a trigger voltage to one or more of the electrically conductive layers, for example layer 901 or 902, when the electric circuit is closed by the injection needle 503. For example, the trigger voltage may be applied to the conductive layer 901 continuously; when the conductive injection needle 503 touches the conductive layer 901, the trigger voltage is then automatically applied to the injection needle. However, a more complex scheme will be disclosed hereinafter. As described above, the injection device 502 may comprise a signal source 506 which may be activated or triggered by the trigger voltage. The trigger voltage may comprise an alternating voltage. However, this is not a limitation.

The electric subsystem may be arranged for applying a detection voltage to at least one electrically conductive layer, for example layer 901 or 902, for detecting a closing of the circuit by the injection needle 503, when the injection needle 503 punctures the vessel wall. For example, the detection voltage may be applied to conductive layer 901, and the touch of the injection needle 503 and electronics of the injection device 502 may be detectable using signal processing which may be provided by a signal processor in the electric subsystem.

The electric subsystem may be arranged for applying the trigger voltage in response to the detection of the closing of the circuit. Consequently, the trigger voltage is only applied when the puncture of the vessel wall is detected. For example, the detection voltage may be a lower voltage than the trigger voltage. Moreover, the two voltages may be associated with different electric circuits, as will be described hereinafter.

As illustrated in Fig. 3, the medical simulator may further comprise a second electrically conductive layer 902 arranged at least partly in between the skin surface 608 and the first electrically conductive layer 901. Consequently, the first electrically conductive layer 901 is arranged at least partly in between the vessel lumen 904 and the second electrically conductive layer 902. Consequently, a needle approaching the vessel lumen 904 from the skin surface 608 first punctures the second layer 902, followed by the first layer 901. This way, the conductive injection needle 503 electrically connects the first layer 901 with the second layer 902 at the time it punctures the first layer 901. The electric subsystem may be arranged for applying the detection voltage in form of a potential difference between the first electrically conductive layer 901 and the second electrically conductive layer 902. The electric subsystem may be arranged to detect an electric conductivity between the first electrically conductive layer 901 and the second electrically conductive layer 902, via the injection needle. This closing of the circuit may correspond to the closing of the switch 320 in the electric diagram of Fig. 5.

The vessel wall may further comprise a third electrically conductive layer 903 arranged with respect to the first electrically conductive layer 901 such that the injection needle can puncture both the first and the third layer in one injection. The first layer 901 is punctured upon entering the vessel 609, whereas the third layer 903 is punctured when the injection needle 503 is pushed through the vessel 609, making a second puncture in the vessel wall. This is illustrated in Fig. 4. At least part of the first electrically conductive layer 901 may be arranged in between at least part of the skin surface 608 and at least part of the third electrically conductive layer 903.

As can be seen in Fig. 3 and Fig. 4, the first conductive layer 901 may be made in the form of a tubular layer, extending fully around the vessel lumen. The second conductive layer 902 and the third conductive layer 903 may extend half around the vessel lumen, on the side facing the skin surface 608 and on the side away from the skin surface, respectively. Such an arrangement allows to include all three layers in a multi-layered vessel wall. However, this configuration is not a limitation. Other arrangements are possible. For example, the second conductive layer 902 could be positioned at the skin surface. The first conductive layer 901 could be arranged half around the vessel lumen, having about the same shape and orientation as the second conductive layer 902.

The electric subsystem may be further arranged for applying a further detection voltage for detecting a closing of a further circuit comprising the third electrically conductive layer 903 and at least part of the injection needle 503. This closing of the further signal may correspond to closing of the switch 309 in Fig. 5. As shown in Fig. 5, the further circuit may partially overlap the first introduced electric circuit which is closed by the switch 320. Moreover, the electric subsystem may be arranged for adjusting the trigger voltage in response to the detection of the closing of the further circuit. For example, the trigger voltage may be stopped upon detecting the closing of the further circuit. This may cause the signal generator of the injection device to stop generating the signal. This way, the medical personnel receives immediate feedback when the needle has been inserted too far into the medical simulator.

The needle may also be connected to a pole of a power supply or to ground by means of an electric wire. In this case, the light could get power when the needle goes through the vessel wall and thereby closes an electronic circuit via a single conductive layer 901. However, this is not a limitation. In the present description, arrangements of the conductive layer(s) and the electric subsystem are described which do not need an electric wire running from the injection device to a power supply or ground. This is advantageous because it increases the similarity between the simulated use and real use. For example, alternating current may be used for the trigger voltage, and the body of the user may be used as the ground. The system may be made safe for the user, as will be apparent to the skilled person in view of the present disclosure, for example by using suitable AC voltage and frequency and a resistance serially connected to the signal generator, which may comprise a neon light source.

When conductive layers 901 and 902 are connected by means of the conductive injection needle 503, these two conductive layers may become part of an electronic circuit, for example a DC circuit, and the electricity running through that circuit may be detected. When detecting the DC current, the AC may be activated on one or more of the conductive layers, and the neon light will produce light. When the needle hits conductive layer 903, the light may be arranged to turn of again. Relays may be used to switch the AC current on and/or off again. Alternatively, optocouplers may be used. Since optocouplers do not have mechanical components, they make less noise than relays, which improves the simulation.

Fig. 5 illustrates an electric subsystem using optocouplers. Such optocouplers are also known in the art as opto-isolators. However, the use of optocouplers is not a limitation. Other kinds of couplers could be used.

Power supply 307 may be implemented as a battery or other low-voltage DC power supply. However, alternative circuit using alternating current is also possible. The power supply 307 connected in series with three optocouplers 305, 306, and 310, a resistor 308, and with the conductive layers 901 and 902. Switch 320 represents the possible conductive connection between conductive layers 901 and 902 by means of the conductive injection needle 503. Parallel to optocoupler 306, the conductive layers 901 and 903 are connected, as illustrated by switch 309. Optocouplers 305 and 306 are connected to a circuit that may put an alternating current on to conductive layer 901 or 902. Optocoupler 310 is connected to microprocessor 311, which may be an Arduino microcontroller. Via microprocessor 311 it is possible to store the moment and duration of the positioning of the infusion. Moreover, the simulation of the dripping of the infusion may be controlled by the microprocessor 311. When the needle is brought in correctly, it goes through conductive layers 901 and 902, such that the switch 320 is closed, and the DC circuit involving power source 307 is closed. The optocouplers 305 and 306 may thus be activated, and thereby close the electric circuit involving power source 301. Power source 301 provides an AC voltage, for example via a DC to AC converter (not shown). Transformer 302 increases the AC voltage. Via resistor 304, an alternating voltage is obtained at 303. For example, an alternating voltage of about 60 volts is realized at 303. This voltage at 303 may be connected to conductive layer 901 or 902, or to another conductive layer which is in contact with the needle at the time of the puncture. This means that wire 303 may be connected to the DC circuit, for example at 303'. Both sides of the transformer may have a pole connected to a pole of the AC power source 301, as shown by wire 321. Moreover, 321 may be connected directly or indirectly to ground, for example via a capacity.

When the needle is pushed through the vessel, it is pushed through conductive layer 903. In that case, all layers 901, 902, and 903 are electrically connected. For example, conductive layers 901 and 903 are also connected. This closes the switch 309, so that the optocoupler 306 is deactivated and the switch of optocoupler 306 is opened. Consequently, the electric circuit involving power supply 301 is broken, and the alternating voltage at 303, and consequently at the corresponding conductive layer, is stopped.

Power supply 301 may be a DC power supply, producing for example 7.5 volt. When the circuit is closed, the DC supply is transformed by DC to AC converter 302. The converter 302 may comprise a transformer, thus providing 12 volt AC. In combination with resistor 304, a maximum voltage of 60 volts may be achieved. Such a set-up may be configured to not result in any little electric shocks for the user. As explained before the user may function as the ground for the signal generator and close the circuit.

If the needle is positioned correctly and the infusion is connected to the needle, i.e., the drip 603 is connected via tube 604 and optionally slider 610 to the infusion connection element 504, the simulation of the dripping may be activated. For example, a LED, such as a blue LED or a white LED, provided in the drip 603 may flash at each drip. The speed by which the LED goes on and off may be controlled by the slider 610 which may be moved up and down and determines the diameter of the tube in a real medical infusion system. In the slider 610 of the simulation system, a variable resistor 313, for example a slide-resistor, may be integrated. With this slider 610, the speed of dripping may be electronically controlled. The variable resistor may be connected with a power supply 315 of the microprocessor, for example a 5V power supply, and may be further connected to a variable input port 317 of the microprocessor. Moreover, electric wiring may be provided in the tube 604, and an electric connector may be integrated in the infusion connector 504 which electrically connects two wires of the tube 604 when properly connected. This way, a switch 314 is implemented in series with the variable resistor 313, which switch 314 is closed when the tube 604 is properly connected to the infusion connector 504. This way, the microprocessor 311 is aware whether the tube 604 is connected to the infusion connector 504 and may be programmed to simulate the dripping only while the tube is properly connected. The signal generator in the drip 603 is shown as LED 312, which is connected to digital output port 318 and ground port 319 of the microprocessor 311. The wiring connecting the microprocessor 311 and the signal generator/LED 312 may be provided via the infusion bag 601 and tube 602. The microprocessor 311 may be put in the infusion bag 601 or the drip 603.

Optocoupler 310 may be connected to power supply port 315 and digital input port 316 of the microprocessor 311. The microprocessor 311 may be programmed such that the LED lights up when both the signal of optocoupler 310 is high and the signal of the infusion connection switch 314 is high. In addition, the variable resistor 313 may be connected to control the speed of the dripping; this may determine how fast the LED is turned on and of.

The simulation system set forth may be used to perform a training session comprising puncturing the electrically conductive layer 901 of the simulated vessel wall with the injection needle 503. In particular, the injection system 501 may be injected into the medical simulator 611 to bring an infusion tube into the artificial vessel 609. Such a training session may involve training medical procedure and team work to a team of professionals. The team may observe the response of the simulation system, including the signals from the signal generator. When the vessel 609 is punctured, a signal may be generated inside the injection device 502. When the injection needle 503 punctures too far, through the vessel, another signal may be generated, or the signal generator may stop. When the signal is produced indicating that the point 505 of the needle 503 is inside the vessel 609, the medical trainees may connect the infusion tube 604 to the tube connector 504 of the injection device 502. The flow of infusion fluid may be simulated by means of a signal generated in the simulated drip 603. The speed of dripping may be adjusted by the trainees by means of the slider 610. The signal generated by the simulated drip 603 may be adapted accordingly. For example, a speed of flashing of a light may be adjusted to simulate a different speed. The infusion bag 601 may be connected to the drip using tube 602.

It will be appreciated that the invention also applies to computer programs, particularly computer programs on or in a carrier, adapted to put the invention into practice. In particular, aspects of the electric subsystem 300 may be implemented in software. An example has been described above in relation to microprocessor 311. For example, a program code implementing at least part of the functionality of the method or system according to the invention may be sub-divided into one or more sub-routines. Many different ways of distributing the functionality among these sub-routines will be apparent to the skilled person. The carrier of a computer program may be any entity or device capable of carrying the program. For example, the carrier may include a storage medium, such as a ROM, for example, a CD ROM or a semiconductor ROM, or a magnetic recording medium, for example, a floppy disc or a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A medical simulator, comprising a vessel (609) representing a simulated blood vessel, the vessel (609) comprising a simulated vessel wall capable of being punctured by an injection needle (503) which is provided with an electrically conductive outside surface, wherein the vessel wall comprises a first electrically conductive layer (901) for closing (320) an electric circuit when the first electrically conductive layer (901) is punctured by the injection needle (503).

2. The medical simulator according to claim 1, wherein the medical simulator comprises an electric subsystem (300) for applying a trigger voltage (303) to the injection needle (503) via an electrically conductive layer (901, 902) of the medical simulator, when the electric circuit is closed (320), for triggering a signal source (506) in an injection device (502) connected to the injection needle (503).

3. The medical simulator according to claim 2, wherein the trigger voltage (303) comprises an alternating voltage.

4. The medical simulator according to claim 1 or 2, wherein the electric subsystem (300) is arranged for applying a detection voltage (307) to at least one electrically conductive layer (901, 902) for detecting a closing (320) of the circuit by the injection needle (503).

5. The medical simulator according to claim 4 in dependence on claim 2, wherein the electric subsystem (300) is arranged for applying the trigger voltage (303) in response to the detection of the closing (320) of the circuit.

6. The medical simulator according to claim 4, further comprising a second electrically conductive layer (902), the first electrically conductive layer (901) being arranged at least partly in between a vessel lumen (904) and the second electrically conductive layer (902), wherein the detection voltage (307) comprises a potential difference between the first electrically conductive layer (901) and the second electrically conductive layer (902), and the electric subsystem (300) is arranged for detecting an electric conductivity between the first electrically conductive layer (901) and the second electrically conductive layer (902).

7. The medical simulator according to any preceding claim, the vessel wall further comprising a third electrically conductive layer (903) arranged with respect to the first electrically conductive layer (901) such that the injection needle can puncture both the first and the third layer in one injection, wherein the first layer (901) is punctured upon entering the vessel (609), and the third layer (903) is punctured when the injection needle (503) is pushed through the vessel (609), making a second puncture in the vessel wall.

8. The medical simulator according to claim 7, wherein the electric subsystem (300) is further arranged for applying a further detection voltage for detecting a closing (309) of a further circuit comprising the third electrically conductive layer (903) and at least part of the injection needle (503), and for adjusting a trigger voltage (303) in response to the detection of the closing (309) of the further circuit.

9. An injection device (502) for simulating an injection into a simulated blood vessel of a medical simulator, comprising
a needle holding element (509) for holding an injection needle (503) which is provided with an electrically conductive outside surface;
a signal source (508) for generating a human-perceptible signal; and
a needle connection element (507) for electrically connecting the signal source (508) to the electrically conductive outside surface, such that an electric circuit comprising the signal source is closed and the signal source is activated when a voltage is applied to the electrically conductive outside surface.

10. The injection device according to claim 9, wherein the injection device comprises an infusion connector (504) for connecting a simulated infusion tube (604).

11. The device according to claim 9, wherein the signal source (508) comprises a light source.

12. The device according to claim 11, wherein the light source comprises a neon light.

13. The device according to claim 9, further comprising an electrically conductive surface element (506) electrically connected to the signal source (508), for enabling a human being to act as a capacitor by touching the surface element.

14. A method of using a medical simulator, comprising puncturing an electrically conductive layer (901) of a simulated vessel wall with an injection needle (503) which is provided with an electrically conductive outside surface to close an electric circuit.

15. The method according to claim 14, further comprising training a medical team a medical procedure comprising a step of injecting an injection device according to claim 9 into a medical simulator according to claim 1.
